# FASCICULE DE BREVET EUROPEEN

(11) **EP 2 743 180 B1**
(45) Date de publication et mention de la délivrance du brevet: **12.07.2017**
(21) Numéro de dépôt: 13306723.1
(22) Date de dépôt: 13.12.2013
(51) Int. Cl.: B64D 9/00, B64F 1/32

(54) **Procédé de traitement automatisé et individualisé de bagages dans un aéronef et soute d'aéronef pour sa mise en oeuvre**
Verfahren zur automatisierten und individuellen Behandlung von Gepäckstücken in einem Luftfahrzeug, und Gepäckraum eines Luftfahrzeugs für dessen Umsetzung
Method for automated, individualised processing of luggage in an aircraft and aircraft cargo bay for implementing same

(30) Priorité: 17.12.2012 FR 1262143
(43) Date de publication de la demande: 18.06.2014
(73) Titulaire: Airbus Opérations SAS, 31060 Toulouse (FR)
(72) Inventeur: Durand, Yves, 31840 AUSSONNE (FR); Guering, Bernard, 31850 MONTRABE (FR)
(74) Mandataire: Fantin, Laurent

(56) Documents cités:
- EP-A2- 2 551 194
- DE-A1-102007 037 404
- DE-A1-102009 052 547
- FR-A1- 2 696 709
- FR-A1- 2 712 565
- GB-A- 967 266
- US-A1- 2007 109 127
- US-A1- 2007 284 481
- US-A1- 2008 128 248

## Description

La présente invention est relative à un procédé de traitement automatisé de bagages dans un aéronef, et à une soute d'aéronef comprenant un dispositif de traitement automatisé de bagages pour la mise en oeuvre de ce procédé.

Dans le transport aérien, les compagnies dites « low-cost » proposent des vols à des prix très bas.

Aussi, afin de pouvoir générer suffisamment de profits, ces compagnies cherchent constamment à augmenter la fréquence des vols de façon à réaliser plus de rotations dans une journée.

Pour ce faire, chaque étape d'une rotation est optimisée afin d'en réduire la durée.

La présente invention vise à réduire la durée d'une étape dénommée « turnaround » débutant à l'arrivée de l'aéronef à l'aérogare et finissant lors du départ de l'aéronef vers le taxyway en vue du décollage.

Cette étape peut se décomposer en différentes phases :
- Débarquement et embarquement des passagers,
- Nettoyage de l'avion,
- Embarquement des besoins passagers : nourriture, boissons, etc.
- Ravitaillement en carburant, etc.
- Déchargement et chargement des bagages des passagers.

La présente invention concerne plus particulièrement le chargement et le déchargement des bagages des passagers en soute.

Selon une première méthode connue, le chargement et le déchargement des bagages en soute s'effectue avec des containers.

Avant le vol, les bagages sont préchargés manuellement dans des containers qui sont ensuite chargés dans la soute de l'aéronef, et après le vol, les containers sont déchargés puis vidés manuellement, les bagages étant mis à disposition des passagers au fur et à mesure sur des convoyeurs.

Cette première méthode, entièrement manuelle, ne satisfait pas les passagers qui doivent attendre longtemps pour enregistrer leurs bagages avant le vol, et pour récupérer leurs bagages après le vol.

En plus, le chargement et le déchargement manuels sont des opérations pénibles et coûteuses.

Selon une seconde méthode connue, le chargement et le déchargement des bagages en soute s'effectue par l'intermédiaire de plateformes de transfert sur lesquelles les bagages sont chargés et déchargés de manière automatisée, comme cela est décrit dans le document WO-2006/040421.

Le traitement automatisé des bagages décrit dans ce document WO-2006/040421 permet de réduire la durée du « turnaround », mais il ne permet pas un traitement en continu des bagages, chaque plateforme de transfert devant être remplie avant d'être acheminée vers la soute de l'aéronef.

Par conséquent, au départ de l'aéronef, les bagages ne peuvent pas être chargés dans la soute de l'aéronef au fur et à mesure de l'arrivée des passagers à la porte d'embarquement, et à l'arrivée, les passagers doivent aussi attendre un certain temps avant de récupérer leurs bagages.

De plus, cette seconde méthode nécessite des bagages spécifiques avec des dimensions particulières et des moyens d'entrainement par crémaillère.

D'un point de vue général, les temps d'attente pour déposer et récupérer les bagages poussent les passagers à ne pas les faire charger en soute.

Et, les passagers, qui sont pressés de sortir de l'aéronef et de récupérer leurs bagages, préfèrent charger leurs bagages en cabine dans les coffres à bagages.

Cependant, ces coffres à bagages situés en cabine ne sont pas prévus pour recevoir de nombreux bagages, d'autant que les passagers ont tendance à embarquer avec des bagages de plus en plus volumineux.

Et, le chargement et le déchargement des coffres à bagages par certains passagers gêne l'embarquement et le débarquement des autres passagers, ce qui vient rallonger la durée de ces deux phases du « turnaround ».

Le document US2008/0128248 décrit un dispositif pour réordonner des bagages entre une zone de stockage et une zone de déchargement. Selon ce document, les bagages transitent sur des convoyeurs. Cette solution ne permet pas d'optimiser le stockage en hauteur.

Le document FR2696709 décrit un dispositif pour envelopper des bagages avec un film plastique qui comprend des moyens de préhension tels que des sangles. Ce document ne décrit pas de solution pour le stockage en hauteur des bagages.

Aussi, la présente invention vise à pallier les inconvénients de l'art antérieur et a pour objectif de stocker un maximum de bagages dans la soute sans perte de volume.

L'invention a pour objet une soute d'aéronef comprenant un dispositif de traitement automatisé de bagages, la soute d'aéronef étant caractérisée en ce que le dispositif de traitement automatisé comprend au moins un bras automatisé de manutention des bagages, chaque bras automatisé étant monté mobile en translation parallèlement à l'axe longitudinal de la soute de l'aéronef, et chaque bras automatisé comprenant une tête de préhension d'un bagage configurée pour fonctionner par dépression ou par magnétisme et offrant une première mobilité en rotation autour d'un premier axe parallèle à l'axe transversal de la soute de l'aéronef et une deuxième mobilité en rotation autour d'un deuxième axe perpendiculaire au premier axe.

Selon une autre caractéristique, la soute comprend un bras automatisé monté mobile en translation parallèlement à l'axe transversal de la soute de l'aéronef.

Selon une autre caractéristique, la soute comprend deux bras automatisés montés mobiles en translation parallèlement entre eux et parallèlement à l'axe longitudinal de la soute de l'aéronef.

Selon une autre caractéristique, chaque bras automatisé comprend un corps extensible dans sa longueur.

Selon une autre caractéristique, le plancher de la soute de l'aéronef comprend un convoyeur à bagages disposé parallèlement à l'axe longitudinal de la soute de l'aéronef.

L'invention a également pour objet une enveloppe de conditionnement d'un bagage pour le traitement automatisé dudit bagage, l'enveloppe prenant la forme d'un film de protection, l'enveloppe étant caractérisée en ce qu'elle comprend une surface de préhension distincte mais solidaire du film de protection, ladite surface de préhension étant portée par un disque et lisse pour une préhension par dépression ou magnétisable pour une préhension magnétique par au moins un bras automatisé d'un dispositif de traitement automatisé de bagages.

Selon d'autres caractéristiques, l'enveloppe comprend une étiquette intelligente et/ou des repères visuels.

L'invention a également pour objet un procédé de traitement automatisé de bagages dans un aéronef comprenant une soute conforme à l'invention, les bagages étant chargés individuellement et de manière automatisée dans la soute de l'aéronef par un dispositif de traitement automatisé des bagages, et, avant leur chargement dans la soute de l'aéronef, les bagages étant conditionnés dans une enveloppe de conditionnement conforme à l'invention.

Selon une autre caractéristique du procédé de traitement automatisé de bagages, l'enveloppe comprend une étiquette intelligente dans laquelle sont stockées des informations relatives aux formes et aux dimensions extérieures du bagage conditionné, et le dispositif de traitement automatisé comprend des moyens pour lire ces étiquettes intelligentes et utilise ces informations pour effectuer le chargement des bagages dans la soute.

Selon une autre caractéristique du procédé de traitement automatisé de bagages, l'enveloppe comprend des repères visuels, le dispositif de traitement automatisé comprenant des moyens de visualisation de ces repères visuels et connaissant de manière virtuelle l'environnement de la soute, le dispositif de traitement automatisé permet de localiser virtuellement un bagage dans la soute. Selon une autre caractéristique du procédé de traitement automatisé de bagages, le dispositif de traitement automatisé fonctionne de manière autonome pour charger les bagages dans la soute de l'aéronef.

Selon une autre caractéristique du procédé de traitement automatisé de bagages, les bagages sont déchargés de manière automatisée et individuellement de la soute de l'aéronef par le dispositif de traitement automatisé de bagages. Selon une autre caractéristique du procédé de traitement automatisé de bagages, le dispositif de traitement automatisé fonctionne de manière autonome pour décharger les bagages de la soute de l'aéronef.

D'autres caractéristiques et avantages ressortiront de la description qui va suivre de l'invention, description donnée à titre d'exemple uniquement, en regard des dessins annexés sur lesquels :
- la figure 1 est une vue en perspective d'un dispositif de conditionnement automatisé de bagages, cette vue illustrant l'invention,
- la figure 2 est une vue partielle d'une soute d'aéronef équipée d'un dispositif de traitement automatisé dans un premier mode de réalisation, cette vue illustrant l'invention,
- la figure 3 est une vue partielle d'une soute d'aéronef équipée d'un dispositif de traitement automatisé dans un second mode de réalisation, cette vue illustrant l'invention,
- la figure 4 est une vue en perspective d'un bras automatisé d'un dispositif de traitement automatisé dans un premier mode de réalisation, cette vue illustrant l'invention,
- la figure 5 est une vue en perspective des bras automatisés d'un dispositif de traitement automatisé dans un second mode de réalisation, cette vue illustrant l'invention.

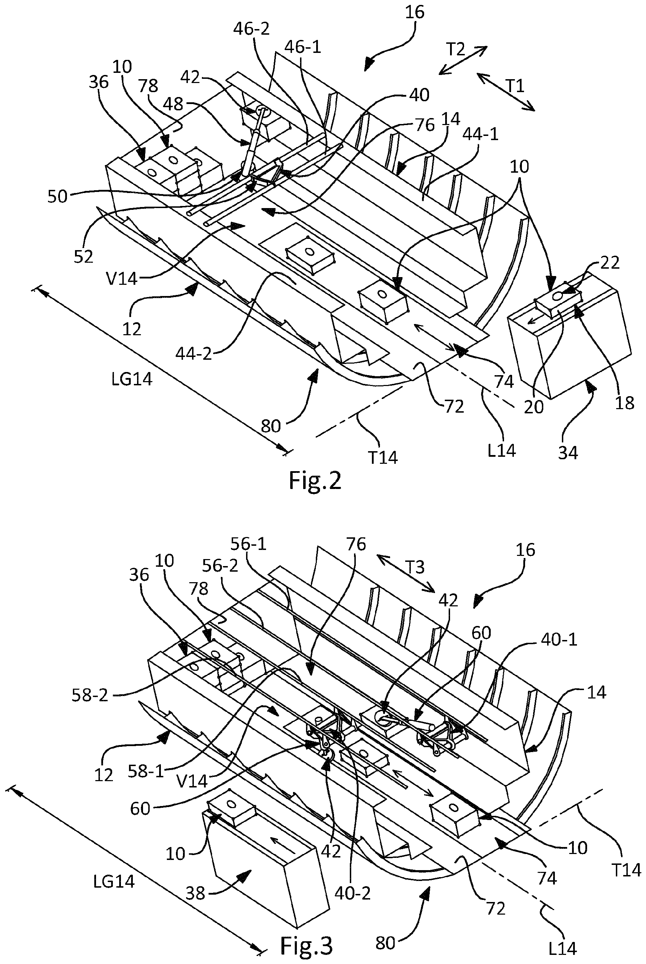

La présente invention est relative à un procédé de traitement automatisé de bagages 10 dans un aéronef 12, la soute 14 de cet aéronef 12 comprenant un dispositif 16 de traitement automatisé des bagages 10, comme l'illustrent les figures 2 et 3.

Par traitement des bagages 10, l'invention entend le convoyage, la préhension et la manutention des bagages 10 en vue de leur chargement dans la soute 14 et de leur déchargement de cette soute 14.

Et, par opération automatisée, l'invention entend une opération effectuée par une machine, sans opération manuelle, c'est-à-dire sans impliquer l'utilisation de la force d'un opérateur ou d'un technicien.

Dans le procédé selon l'invention, les bagages 10 sont chargés de manière automatisée dans la soute 14 de l'aéronef 12 par le dispositif 16 de traitement automatisé de bagages.

Par chargement, l'invention entend l'opération visant à stocker les bagages 10 de manière ordonnée dans la soute 14.

Selon l'invention, un chargement ordonné a pour objectif de stocker un maximum de bagages 10 dans la soute 14 sans perte de volume.

Durant l'opération de chargement, il peut être utilisé des moyens de retenue tels des filets connus de l'art antérieur pour assurer la stabilité des bagages 10 au fur et à mesure de leur chargement dans la soute 14.

Avantageusement, ces moyens de retenue assurent aussi la stabilité des bagages 10 chargés durant le vol de l'aéronef.

Contrairement au préchargement en containers de l'art antérieur, dans la présente invention, les bagages 10 sont chargés individuellement dans la soute 14 de l'aéronef 12 par le dispositif 16 de traitement automatisé de bagages.

Par individuellement, l'invention entend que les bagages 10 sont chargés un par un par le dispositif 16 de traitement automatisé dans la soute 14.

En vue de sa manutention par le dispositif 16 de traitement automatisé, et juste avant son chargement dans la soute 14 de l'aéronef, chaque bagage 10 est conditionné dans une enveloppe 18 de conditionnement prenant la forme d'un film de protection 20.

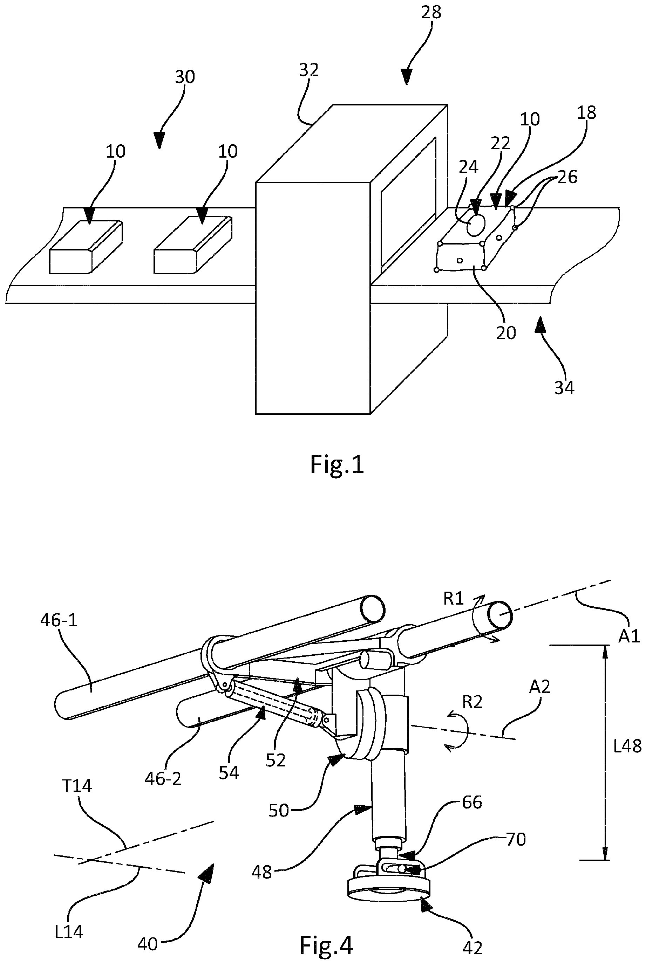

En vue de la manutention du bagage 10 par le dispositif 16, cette enveloppe 18 de conditionnement comprend une surface 22 de préhension distincte mais solidaire du film de protection 20, comme représenté en figure 1.

Dans une première variante préférée, la surface 22 est adaptée pour une préhension par dépression. A cet effet, la surface 22 est lisse.

Dans une seconde variante, la surface 22 est adaptée pour une préhension magnétique. A cet effet, la surface 22 est magnétisable.

Dans la première ou dans la seconde variante, la surface 22 de préhension est portée par un disque 24.

Aussi, dans la première variante, le disque 24 peut être réalisé dans un matériau plastique, alors que dans la deuxième variante, le disque 24 peut être réalisé dans un matériau métallique.

Le film de protection 20 est en matériau plastique, éventuellement renforcé par une trame de fibres de verre.

Pour une manutention sûre, les bagages 10 sont emballés dans le film de protection 20 sous une légère dépression.

En plus de sa fonction relative à la manutention d'un bagage 10, ce film de protection 20 permet de protéger le bagage 10 contre les coups durant son traitement.

Le film de protection 20 est aussi un gage de non violation du bagage 10, l'intégrité du film 20 pouvant être vérifiée visuellement et rapidement, lors d'un contrôle par un agent de l'aérogare ou par le passager après son débarquement, pour s'assurer que le bagage 10 n'a pas été ouvert.

Le film de protection 20 permet aussi d'éviter une ouverture accidentelle du bagage 10.

Le film de protection 20 permet surtout de ramener les poignées, les sangles ou tout autre élément contre le corps principal du bagage 10, évitant ainsi des désagréments lors de la manutention et lors du convoyage du bagage 10.

Selon un autre avantage, l'enveloppe 18 peut être utilisée pour compacter chaque bagage 10 à traiter.

A cet effet, chaque bagage 10 est emballé dans le film de protection 20 sous une légère dépression.

Ce compactage des bagages 10 facilite leur traitement, par exemple en générant des faces inférieures et supérieures sensiblement planes, et leur chargement sans perte de volume dans la soute 14.

En vue de l'automatisation du procédé de traitement individualisé, l'enveloppe 18 peut comprendre une étiquette intelligente dans laquelle sont stockées différentes informations relatives au bagage 10 conditionné et utiles au traitement automatisé du bagage 10.

Parallèlement, le dispositif 16 de traitement automatisé comprend des moyens pour lire ces étiquettes intelligentes.

Ainsi, le dispositif 16 de traitement automatisé peut utiliser les informations contenues dans les étiquettes intelligentes pour améliorer le traitement des bagages 10.

De préférence, les informations contenues dans l'étiquette intelligente concernent les formes et les dimensions extérieures du bagage 10.

Et, le dispositif 16 de traitement automatisé utilise ces informations pour effectuer le chargement individualisé des bagages 10 dans la soute 14.

Grâce à l'acquisition de ces informations concernant les formes et les dimensions extérieures de chaque bagage 10, le dispositif 16 de traitement automatisé permet d'agencer les différents bagages 10 dans la soute 14 sans perte de volume.

En vue d'améliorer la manutention effectuée par le dispositif 16 de traitement automatisé, les informations contenues dans l'étiquette intelligente peuvent concerner : le centre de gravité du bagage 10, son poids, le type du bagage 10, et la catégorie du bagage 10 : fragilité, danger, etc.

Par exemple, la connaissance de la position du centre de gravité du bagage 10 permet au dispositif 16 de traitement automatisé d'effectuer la manutention sans que le bagage 10 ait tendance à basculer, et donc sans devoir contrer un couple de basculement.

Pour favoriser la traçabilité des bagages 10, les informations contenues dans l'étiquette intelligente peuvent concerner : l'identité du passager propriétaire du bagage 10 et l'identification du ou des aéronef(s) 12 dans lequel le bagage 10 doit être chargé.

En vue de l'automatisation du procédé de traitement individualisé, l'enveloppe 18 peut comprendre des repères visuels 26.

Parallèlement, le dispositif 16 de traitement automatisé comprend des moyens de visualisation de ces repères visuels 26, tels des caméras et des moyens de traitement d'images appropriés.

Les moyens de visualisation du dispositif 16 fonctionnent comme des moyens de capture de mouvement, les repères visuels 26 étant les marqueurs utiles à cette capture.

Grâce aux repères visuels 26, et le dispositif 16 de traitement automatisé connaissant de manière virtuelle l'environnement de la soute 14, le dispositif 16 de traitement automatisé permet de localiser virtuellement un bagage 10 dans la soute 14.

Il n'est donc pas nécessaire que les bagages 10 arrivent à un endroit précis et dans une orientation précise pour pouvoir être manipulés par le dispositif 16 de traitement automatisé.

L'environnement virtuel de la soute 14 peut être acquis par le dispositif 16 de traitement automatisé de différentes manières.

Dans une première variante, la soute 14 de l'aéronef 12 est modélisée numériquement par un dispositif extérieur, puis l'environnement virtuel ainsi créé est acquis par le dispositif 16 de traitement automatisé.

Dans une seconde variante, la soute 14 de l'aéronef est équipée de cibles visuelles, similaires aux repères visuels 26 équipant l'enveloppe 18 des bagages 10 et repérables par les moyens de visualisation du dispositif 16 de traitement automatisé pour modéliser numériquement la soute 14.

En alternative aux étiquettes intelligentes, les repères visuels 26 permettent au dispositif 16 de traitement automatisé, via ses moyens de visualisation, de connaître les formes et les dimensions extérieures du bagage 10.

Grâce aux repères visuels 26, des bagages 10 de différentes formes et de différentes dimensions peuvent être traités par le dispositif 16 de traitement automatisé.

Et, le dispositif 16 de traitement automatisé peut utiliser les informations fournies par les repères visuels 26 pour effectuer le chargement des bagages 10 dans la soute 14, et plus particulièrement pour agencer les différents bagages 10 dans la soute 14 sans perte de volume.

En vue d'améliorer la manutention effectuée par le dispositif 16 de traitement automatisé, les informations fournies par les repères visuels 26 peuvent aussi permettre de déterminer : le centre de gravité du bagage 10, le type du bagage 10, etc.

Grâce aux étiquettes intelligentes et/ou aux repères visuels 26 des enveloppes 18 des bagages 10 et/ou aux cibles visuelles équipant la soute 14, le dispositif 16 de traitement automatisé autorise un chargement autonome ou semi-autonome des bagages 10, comme détaillé ultérieurement.

En vue d'une complète automatisation du procédé de traitement individualisé selon l'invention, les bagages 10 sont conditionnés de manière automatisée par un dispositif de conditionnement 28, tel celui illustré en figure 1.

Ce dispositif de conditionnement 28, par exemple prévu dans les quais d'embarquement d'une aérogare à proximité de chaque passerelle d'embarquement, comprend un convoyeur d'entrée 30 sur lequel sont déposés les bagages 10 à conditionner, un dispositif 32 pour conditionner automatiquement chaque bagage 10 dans une enveloppe 18 de protection, et un convoyeur de sortie 34 sur lequel transitent les bagages 10 conditionnés.

De préférence, le conditionnement automatisé des bagages 10 a lieu juste avant l'embarquement des passagers.

Avantageusement, le dispositif de conditionnement 28 permet de mettre en oeuvre le compactage des bagages 10.

A cet effet, il peut être prévu un plateau supérieur et un plateau inférieur écrasant le bagage 10 lors de son conditionnement, l'écrasement étant contrôlé de façon que la valeur d'écrasement se rapproche d'une pression correspondant à celle pouvant être appliquée sur un bagage lorsque le bagage est disposé sous d'autres bagages.

Pour faciliter le conditionnement automatisé des bagages 10 et favoriser un remplissage optimal de la soute 14 par le dispositif 16 de traitement automatisé, les différents bagages 10 à traiter ont idéalement des formes, par exemple parallélépipédique, et des volumes sensiblement identiques, et par exemple imposés par la compagnie aérienne par le biais d'une politique de prime compagnie. En variante, des bagages 10 pré-conditionnés et intégrant l'enveloppe de protection 18 avec la surface de préhension 22 pourront être prévus, et par exemple vendus aux passagers par la compagnie aérienne.

En vue d'une complète automatisation du procédé de traitement individualisé, les bagages 10 conditionnés dans leur enveloppe 18 peuvent être convoyés de manière automatisée vers la soute 14 de l'aéronef 12.

Par exemple, comme illustré en figure 2, le convoyeur de sortie 34 du dispositif de conditionnement 28 permet de transporter les bagages 10 conditionnés jusqu'à l'entrée de la soute 14 de l'aéronef.

Dans le procédé de traitement automatisé et individualisé selon l'invention, les bagages 10 sont aussi déchargés de manière automatisée de la soute 14 de l'aéronef 12 par le dispositif 16 de traitement automatisé de bagages.

Comme pour le chargement, les bagages 10 sont déchargés individuellement de la soute 14 de l'aéronef 12 par le dispositif 16 de traitement automatisé de bagages.

Par déchargement, l'invention entend l'opération consistant à séparer chaque bagage 10 de l'ensemble 36 des bagages 10 stockés de manière ordonnée dans la soute 14.

Grâce aux étiquettes intelligentes et/ou aux repères visuels 26 des enveloppes 18 des bagages 10 et/ou aux cibles visuelles équipant la soute 14, le dispositif 16 de traitement automatisé offre un déchargement autonome ou semi-autonome des bagages 10, comme détaillé ultérieurement.

Avantageusement, les bagages 10 sont déchargés de la soute 14 sur un convoyeur 38 situé à l'extérieur de l'aéronef 12 et à proximité de la soute 14.

Ce convoyeur 38 permet de mettre les bagages 10 à disposition des passagers, qui peuvent ainsi récupérer leurs bagages 10 directement en débarquant de l'aéronef 12.

Selon l'invention, les bagages 10 sont chargés dans la soute 14 de l'aéronef 12 dans un ordre fonction de l'ordre dans lequel les passagers embarquent dans l'aéronef.

De préférence, pour fluidifier la phase d'embarquement des passagers, les bagages 10 sont chargés dans la soute 14 de l'aéronef 12 dans l'ordre dans lequel les passagers embarquent dans l'aéronef.

L'arrivée des bagages 10 dans la soute 14 de l'aéronef 12 dans le même ordre que les passagers est favorisée par la présence du dispositif de conditionnement 28 dans le quai d'embarquement à proximité de la passerelle d'embarquement.

En effet, les bagages 10 sont déposés par les passagers sur le convoyeur d'entrée 30 du dispositif de conditionnement 28 au fur et à mesure de leur embarquement, puis ces bagages 10 sont conditionnés et convoyés automatiquement dans l'ordre d'embarquement des passagers vers la soute 14 de l'aéronef.

De même, selon l'invention, les bagages 10 sont déchargés de la soute 14 de l'aéronef 12 dans un ordre fonction de l'ordre dans lequel les passagers débarquent de l'aéronef.

De préférence, pour fluidifier la phase de débarquement des passagers, les bagages 10 sont déchargés de la soute 14 de l'aéronef 12 dans l'ordre dans lequel les passagers débarquent de l'aéronef.

Aussi, dans le cas où les passagers débarquent dans l'ordre inverse de l'ordre dans lequel ils ont embarqué, les bagages 10 sont chargés dans la soute 14 de l'aéronef dans l'ordre dans lequel les passagers embarquent, et ils pourront être déchargés dans l'ordre dans lequel les passagers débarquent.

Dans une variante optimisée du procédé de traitement individualisé selon l'invention, le dispositif 16 de traitement automatisé fonctionne de manière autonome.

Par fonctionnement autonome, l'invention entend un fonctionnement sans aucune intervention humaine.

Le dispositif 16 de traitement automatisé fonctionne de manière autonome au moins pour charger les bagages 10 dans la soute 14 de l'aéronef 12.

Un tel chargement autonome est permis par les repères visuels 26 présents sur les bagages 10 et par les moyens de visualisation du dispositif 16 de traitement automatisé, et éventuellement par les étiquettes intelligentes équipant les bagages 10 et par les moyens de lecture de ces étiquettes dont dispose le dispositif 16.

Bien entendu, le dispositif 16 de traitement est programmé pour la mise en oeuvre d'un tel chargement autonome.

Dans ce mode de fonctionnement autonome, le dispositif 16 de traitement est capable de visualiser, de localiser, d'identifier, de saisir et de manutentionner seul et automatiquement les bagages 10 arrivant dans la soute 14 de l'aéronef 12. Par exemple, pour l'identification de chaque bagage 10, le dispositif 16 de traitement attribue un index différent à chaque bagage 10.

Avantageusement, grâce à la visualisation des formes et des dimensions des différents bagages 10, à la connaissance virtuelle de l'environnement de la soute 14 de l'aéronef, et à un programme approprié, le dispositif 16 de traitement automatisé est capable d'agencer différents bagages 10 dans la soute 14 sans perte de volume.

Le dispositif 16 de traitement automatisé peut aussi fonctionner de manière autonome pour décharger les bagages 10 de la soute 14 de l'aéronef 12.

Et, les fonctionnements des différents convoyeurs 30,34,38, et/ou du dispositif de conditionnement 28 peuvent aussi être facilement rendus autonomes à l'aide de différents capteurs et de programmes appropriés.

Dans une variante moins optimisée du procédé de traitement individualisé selon l'invention, le fonctionnement du dispositif 16 de traitement automatisé est semi-autonome.

Par semi-autonome, l'invention entend un fonctionnement partiellement contrôlé par un opérateur.

De préférence, le fonctionnement du dispositif 16 de traitement automatisé est commandé à distance par un opérateur.

A cet effet, l'opérateur peut être en immersion dans la soute 14 depuis sa salle de travail par le biais d'un écran tactile ou d'un casque immersif.

Ce poste de commande à distance du dispositif 16 peut se trouver à l'entrée de la soute 14, dans la cabine de l'aéronef 12, ou même dans l'aérogare.

Pour la mise en oeuvre de ce fonctionnement semi-autonome, il peut être prévu des moyens immersifs permettant à l'opérateur de se transposer virtuellement dans la soute 14 de l'aéronef, l'environnement virtuel de la soute 14 ayant été acquis au préalable par le dispositif 16 de traitement automatisé.

Avantageusement, le travail à distance de l'opérateur est assisté et facilité par les repères visuels 26 présents sur les bagages 10 et par les moyens de visualisation du dispositif 16 de traitement automatisé, et éventuellement par les étiquettes intelligentes équipant les bagages 10 et par les moyens de lecture de ces étiquettes dont dispose le dispositif 16.

En effet, comme dans le mode de fonctionnement autonome, le dispositif 16 de traitement est capable de visualiser, de localiser, et d'identifier seul et automatiquement les bagages 10 arrivant dans la soute 14 de l'aéronef 12.

Par la suite, l'opérateur n'a plus qu'à guider le dispositif 16 de traitement automatisé, via l'écran tactile ou les moyens immersifs, pour effectuer la préhension et la manutention des bagages 10 en vue d'agencer différents bagages 10 dans la soute 14 sans perte de volume.

Par exemple, dans le cas d'un chargement des bagages semi-autonome, le rôle de l'opérateur est de sélectionner, via l'écran tactile, un des bagages 10 identifiés par un index, et d'indiquer, toujours via l'écran tactile, au dispositif 16 de traitement automatisé où déposer le bagage 10 choisi dans la soute 14, le dispositif 16 étant programmé pour assurer seul la préhension et la manutention du bagage 10 jusqu'à l'endroit indiqué par l'opérateur, et cette séquence étant répétée par l'opérateur pour chaque bagage 10 à charger.

Ou, dans une procédure plus automatisée, l'opérateur n'a qu'à sélectionner les bagages 10 l'un après l'autre, le dispositif 16 étant programmé pour trouver seul l'endroit le plus approprié pour déposer chaque bagage 10 sélectionné dans la soute 14, ainsi que pour assurer seul la préhension et la manutention du bagage 10 sélectionné jusqu'à l'endroit le plus approprié.

Le dispositif 16 de traitement automatisé peut fonctionner de manière semi-autonome pour charger les bagages 10 dans la soute 14 de l'aéronef 12, ainsi que pour décharger les bagages 10 de la soute 14 de l'aéronef 12.

Les fonctionnements des différents convoyeurs 30,34,38, et du dispositif de conditionnement 28 étant liés à celui du dispositif 16 de traitement automatisé, ces fonctionnements sont aussi semi-autonomes.

L'invention prévoit aussi une conception d'une soute 14 d'aéronef 12 permettant la mise en oeuvre du procédé de traitement automatisé et individualisé qui vient d'être décrit.

Comme indiqué précédemment, la soute 14 permettant cette mise en oeuvre du procédé comprend un dispositif 16 de traitement automatisé de bagages 10.

Ce dispositif 16 de traitement automatisé de bagages 10 est embarqué car il est toujours présent dans la soute 14 de l'aéronef.

Dans la présente description, l'axe longitudinal L14 de la soute est un axe sensiblement horizontal et parallèle à l'axe avion s'étendant de l'avant à l'arrière de l'aéronef, et l'axe transversal T14 de la soute 14 est un axe sensiblement horizontal et perpendiculaire à cet axe avion.

Dans un premier mode de réalisation illustré par les figures 2 et 4, ce dispositif 16 de traitement automatisé comprend un unique bras automatisé 40 de manutention des bagages 10, ce bras automatisé 40 étant monté mobile en translation T1 parallèlement à l'axe longitudinal L14 de la soute 14 de l'aéronef 12.

Avantageusement, le bras automatisé 40 peut se translater sur toute la longueur L614 de la soute 14.

En vue de la manutention des bagages 10, ce bras automatisé 40 comprend une tête de préhension 42 d'un bagage 10.

Dans une première variante préférée du bras automatisé 40, la tête de préhension 42 fonctionne par dépression. A cet effet, cette tête de préhension 42 prend par exemple la forme d'une ventouse.

Dans une seconde variante du bras automatisé 40, la tête de préhension 42 fonctionne par magnétisme. A cet effet, cette tête de préhension 42 comprend par exemple un électroaimant.

Pour faciliter la préhension de chaque bagage 10 par la tête de préhension 42, la surface 22 de préhension de l'enveloppe 18 est de diamètre supérieur au diamètre de la tête de préhension 42, dans la première ou dans la seconde variante du bras automatisé 40.

Dans ce premier mode de réalisation, le bras automatisé 40 est aussi monté mobile en translation T2 parallèlement à l'axe transversal T14 de la soute 14 de l'aéronef.

Et, le bras automatisé 40 offre une première mobilité en rotation R1 autour d'un premier axe A1 parallèle à l'axe transversal T14 de la soute 14 de l'aéronef 12, et une deuxième mobilité en rotation R2 autour d'un deuxième axe A2 perpendiculaire au premier axe A1.

Pour obtenir de telles mobilités du bras 40, il est prévu deux montants longitudinaux 44-1,44-2 fixés de part et d'autre de la soute 14 parallèlement à l'axe longitudinal L14 de celle-ci, ainsi que deux montants transversaux 46-1,46-2 coulissant perpendiculairement à l'axe longitudinal L14 sur ces deux montants longitudinaux 44-1,44-2.

Et, le bras 40 comprend un corps 48 monté en rotation sur une platine 50 montée pivotante sur un coulisseau 52 se translatant sur les montants transversaux 46-1,46-2.

La rotation R2 du corps 48 par rapport à la platine 50 et la translation T2 du coulisseau 52 par rapport aux montants transversaux 46-1,46-2 peuvent être entraînées par des moteurs, tandis que la rotation R1 de la platine 50 par rapport au coulisseau 52 peut être entraînée par un vérin 54.

Grâce à ses différentes mobilités, le bras 40 peut se déplacer dans tout le volume V14 de la soute 14.

Avantageusement, les différentes mobilités du bras automatisé 40 peuvent être utilisées simultanément.

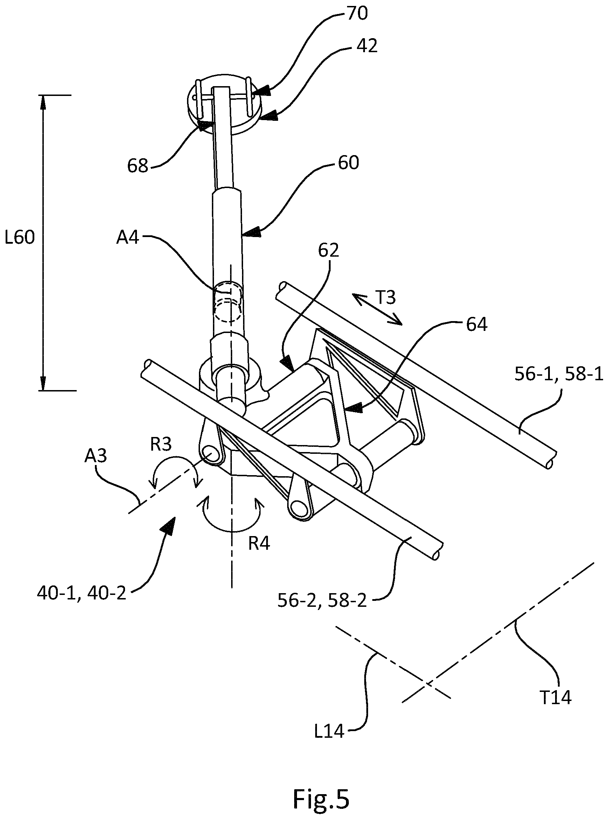

Dans un second mode de réalisation illustré par les figures 3 et 5, le dispositif 16 de traitement automatisé comprend deux bras automatisés 40-1,40-2 de manutention des bagages 10, ces bras automatisés 40-1,40-2 étant montés mobiles en translation T3 parallèlement entre eux et parallèlement à l'axe longitudinal L14 de la soute 14 de l'aéronef 12.

Avantageusement, les bras automatisés 40-1,40-2 peuvent se translater sur toute la longueur LG14 de la soute 14.

En vue de la manutention des bagages 10, chacun de ces bras automatisés 40-1,40-2 comprend une tête de préhension 42 d'un bagage 10.

Dans une première variante préférée des bras automatisés 40-1,40-2, la tête de préhension 42 fonctionne par dépression. A cet effet, cette tête de préhension 42 prend par exemple la forme d'une ventouse.

Dans une seconde variante des bras automatisés 40-1,40-2, la tête de préhension 42 fonctionne par magnétisme. A cet effet, cette tête de préhension 42 comprend par exemple un électroaimant.

Pour faciliter la préhension de chaque bagage 10 par la tête de préhension 42, la surface 22 de préhension de l'enveloppe 18 est de diamètre supérieur au diamètre de la tête de préhension 42, dans la première ou dans la seconde variante des bras automatisés 40-1,40-2.

Dans ce second mode de réalisation, chaque bras automatisé 40-1,40-2 offre aussi une première mobilité en rotation R3 autour d'un premier axe A3 parallèle à l'axe transversal T14 de la soute 14 de l'aéronef 12, et une deuxième mobilité en rotation R4 autour d'un deuxième axe A4 perpendiculaire au premier axe A3.

Pour obtenir de telles mobilités, il est prévu, pour chaque bras automatisé 40-1,40-2, deux montants longitudinaux 56-1,56-2 et 58-1,58-2 fixés parallèlement à l'axe longitudinal L14 de la soute 14, chaque bras automatisé 40-1,40-2 coulissant parallèlement à l'axe longitudinal L14 sur ces deux montants longitudinaux 56-1,56-2 et 58-1,58-2.

Et, chaque bras automatisé 40-1,40-2 comprend un corps 60 monté en rotation sur une platine 62 montée pivotante sur un coulisseau 64 se translatant sur les montants longitudinaux 56-1,56-2 et 58-1,58-2.

La rotation R4 du corps 60 par rapport à la platine 62 et la translation T3 du coulisseau 64 par rapport aux montants longitudinaux 56-1,56-2 et 58-1,58-2 peuvent être entraînées par des moteurs, tandis que la rotation R3 de la platine 62 par rapport au coulisseau 64 peut être entraînée par un vérin.

Grâce à leurs différentes mobilités, les bras 40-1,40-2 couvrent la totalité du volume V14 de la soute 14.

Avantageusement, les deux bras 40-1,40-2 fonctionnent indépendamment, et les différentes mobilités de chacun des bras 40-1,40-2 peuvent être utilisées simultanément.

Dans un mode de fonctionnement semi-autonome, les bras 40-1,40-2 sont de préférence commandés à distance par des opérateurs différents.

Dans le premier et dans le second mode de réalisation du dispositif 16 de traitement automatisé, chaque bras automatisé 40,40-1,40-2 comprend un corps 48,60 extensible dans sa longueur L48,L60.

A cet effet, un corps 48,60 a une conception télescopique, à 3 brins par exemple.

Toujours dans le premier et dans le second mode de réalisation du dispositif 16 de traitement automatisé, la tête de préhension 42 étant montée à l'extrémité inférieure 66,68 du corps 48,60, la tête de préhension 42 est montée à cette extrémité inférieure 66,68 par l'intermédiaire d'une rotule 70, de préférence à retour élastique.

Encore dans le premier et dans le second mode de réalisation du dispositif 16 de traitement automatisé, il peut être prévu que le plancher 72 de la soute 14 de l'aéronef 12 comprenne un convoyeur 74 à bagages disposé parallèlement à l'axe longitudinal L14 de la soute 14 de l'aéronef.

De préférence, ce convoyeur 74 s'étend jusqu'à proximité du fond 76 de la soute 14, le ou les bras 40,40-1,40-2 pouvant ainsi travailler sans se déplacer en translation longitudinale T1,T3 dans le fond 76 de la soute 14 en début de chargement ou en fin de déchargement.

Ce convoyeur 74 complémentaire, aussi utile lors du chargement que du déchargement des bagages 10, permet de créer une zone de transition dans laquelle des bagages 10 peuvent être stockés temporairement.

En permettant de limiter le nombre et l'amplitude des translations longitudinales T1,T3 des bras automatisés 40,40-1,40-2 dans la longueur de la soute 14, ce convoyeur 74 permet d'accélérer le traitement des bagages 10, tant lors de leur chargement que lors de leur déchargement.

Lors d'un chargement en fonctionnement autonome ou semi-autonome, les bagages 10 sont convoyés par le convoyeur 74 vers le fond 76 de la soute 14 où il sont saisis puis empilés par le ou les bras automatisés 40,40-1,40-2 en attente au fond 76 de la soute 14.

Au début d'un chargement, les bagages 10 sont empilés par le ou les bras automatisés 40,40-1,40-2 contre la paroi transversale 78 du fond 76 de la soute 14, et superposés sur toute la hauteur de la soute 14 jusqu'à former une rangée occupant le plus possible l'espace disponible.

Puis, au fur et à mesure du chargement, le ou les bras automatisés 40,40-1,40-2 se déplacent progressivement en translation longitudinale T1,T3 vers l'entrée 80 de la soute 14 pour former, l'une après l'autres, des rangées de bagages 10.

Une fois le chargement effectué, et donc durant le vol de l'aéronef 12, le ou les bras automatisés 40,40-1,40-2 restent stockés près de l'entrée 80 de la soute 14.

Et, une fois le vol terminé, le déchargement en fonctionnement autonome ou semi-autonome se déroule en sens inverse du chargement : les rangées de bagages 10 étant désempilées l'une après l'autre par le ou les bras automatisés 40,40-1,40-2, de l'entrée 80 vers le fond 76 de la soute 14 et par l'intermédiaire du convoyeur 74.

Grâce à la présente invention, les passagers auront moins d'intérêts à garder des bagages en cabine, et donc les volumes des coffres à bagages pourront être réduits pour offrir plus de confort aux passagers.

## Revendications

1. Soute (14) d'aéronef (12) comprenant un dispositif (16) de traitement automatisé de bagages (10), le dispositif (16) de traitement automatisé comprenant au moins un bras automatisé (40,40-1,40-2) de manutention des bagages (10), chaque bras automatisé (40,40-1,40-2) étant monté mobile en translation (T1,T3) parallèlement à l'axe longitudinal (L14) de la soute (14) de l'aéronef (12), et chaque bras automatisé (40,40-1,40-2) comprenant une tête de préhension (42) d'un bagage (10) configurée pour fonctionner par dépression ou par magnétisme et offrant une première mobilité en rotation (R1,R3) autour d'un premier axe (A1,A3) parallèle à l'axe transversal (T14) de la soute (14) de l'aéronef et une deuxième mobilité en rotation (R2,R4) autour d'un deuxième axe (A2,A4) perpendiculaire au premier axe (A1,A3).

2. Soute (14) d'aéronef (12) selon la revendication 1, dans laquelle l'au moins un bras automatisé (40) est monté mobile en translation (T1) parallèlement à l'axe transversal (T14) de la soute (14) de l'aéronef.

3. Soute (14) d'aéronef (12) selon la revendication 1, dans laquelle deux bras automatisés (40-1,40-2) sont montés mobiles en translation (T3) parallèlement entre eux et parallèlement à l'axe longitudinal (L14) de la soute (14) de l'aéronef.

4. Soute (14) d'aéronef (12) selon l'une des revendications 1 à 3, dans laquelle chaque bras automatisé (40,40-1,40-2) comprend un corps (48,60) extensible dans sa longueur (L48, L60).

5. Soute (14) d'aéronef (12) selon l'une des revendications 1 à 4, dans laquelle le plancher (72) de la soute (14) de l'aéronef comprend un convoyeur (74) à bagages (10) disposé parallèlement à l'axe longitudinal (L14) de la soute (14) de l'aéronef.

6. Enveloppe (18) de conditionnement d'un bagage (10) pour le traitement automatisé dudit bagage, l'enveloppe (18) prenant la forme d'un film de protection (20), et comprenant une surface (22) de préhension distincte mais solidaire du film de protection, ladite surface (22) de préhension étant **portée par un disque (24) et lisse** pour une préhension par dépression ou **magnétisable** pour une préhension magnétique par l'au moins un bras automatisé (40,40-1,40-2) du dispositif (16) de traitement automatisé de bagages (10) équipant une soute d'aéronef selon l'une des revendications 1 à 5.

7. Enveloppe (18) de conditionnement d'un bagage (10) pour le traitement automatisé dudit bagage selon la revendication 6, dans laquelle l'enveloppe (18) comprend une étiquette intelligente.

8. Enveloppe (18) de conditionnement d'un bagage (10) pour le traitement automatisé dudit bagage (10) selon l'une des revendications 6 à 7, dans laquelle l'enveloppe (18) comprend des repères visuels (26).

9. Procédé de traitement automatisé de bagages (10) dans un aéronef (12) comprenant une soute selon l'une des revendications 1 à 5, les bagages (10) étant chargés individuellement et de manière automatisée dans la soute (14) de l'aéronef par le dispositif (16) de traitement automatisé des bagages, et, avant leur chargement dans la soute (14) de l'aéronef (12), les bagages (10) étant conditionnés dans une enveloppe (18) de conditionnement selon l'une des revendications 6 à 8.

10. **Procédé de traitement automatisé de bagages (10) dans un aéronef (12) selon la revendication 9, caractérisé en ce que les bagages (10) sont emballés dans le film de protection (20) sous une dépression.**

11. Procédé de traitement automatisé de bagages (10) dans un aéronef (12) selon la revendication 9 ou 10, dans lequel, l'enveloppe (18) comprenant une étiquette intelligente dans laquelle sont stockées des informations relatives aux formes et aux dimensions extérieures du bagage (10) conditionné, et le dispositif (16) de traitement automatisé comprenant des moyens pour lire ces étiquettes intelligentes, le dispositif (16) de traitement automatisé utilise ces informations pour effectuer le chargement des bagages (10) dans la soute (14).

12. Procédé de traitement automatisé de bagages (10) dans un aéronef (12) selon l'une des revendications 9 à 11, dans lequel, l'enveloppe (18) comprenant des repères visuels (26), le dispositif (16) de traitement automatisé comprenant des moyens de visualisation de ces repères visuels (26), et le dispositif (16) de traitement automatisé connaissant de manière virtuelle l'environnement de la soute (14), le dispositif (16) de traitement automatisé localise virtuellement un bagage (10) dans la soute (14).

13. Procédé de traitement automatisé de bagages (10) dans un aéronef (12) selon l'une des revendications 9 à 12, dans lequel le dispositif (16) de traitement automatisé fonctionne de manière autonome pour charger les bagages (10) dans la soute (14) de l'aéronef (12).

14. Procédé de traitement automatisé de bagages (10) dans un aéronef (12) selon l'une des revendications 9 à 13, dans lequel les bagages (10) sont déchargés de manière automatisée et individuellement de la soute (14) de l'aéronef (12) par le dispositif (16) de traitement automatisé de bagages (10).

15. Procédé de traitement automatisé de bagages (10) dans un aéronef (12) selon la revendication 14, dans lequel le dispositif (16) de traitement automatisé fonctionne de manière autonome pour décharger les bagages (10) de la soute (14) de l'aéronef (12).

## Patentansprüche

1. Gepäckraum (14) eines Luftfahrzeugs (12) mit einer Vorrichtung (16) für die automatisierte Behandlung von Gepäckstücken (10), wobei die Vorrichtung (16) für die automatisierte Behandlung wenigstens einen automatisierten Arm (40, 40-1, 40-2) für die Handhabung der Gepäckstücke (10) aufweist, wobei der automatisierte Arm (40, 40-1, 40-2) jeweils in eine Verschieberichtung (T1, T3) parallel zur Längsachse (L14) des Gepäckraums (14) des Luftfahrzeugs (12) verschiebbar montiert ist und der automatisierte Arm (40, 40-1, 40-2) jeweils einen Greifkopf (42) für ein Gepäckstück (10) aufweist, der dazu eingerichtet ist, mittels Unterdruck oder Magnetismus zu funktionieren und eine erste Drehbeweglichkeit (R1, R3) um eine erste Achse (A1, A3) bietet, die parallel zur Längsachse (T14) des Gepäckraums (14) des Luftfahrzeugs ist, und eine zweite Drehbeweglichkeit (R2, R4) um eine zweite Achse (A2, A4) im rechten Winkel zur ersten Achse (A1, A3) bietet.

2. Gepäckraum (14) eines Luftfahrzeugs (12) nach Anspruch 1, bei dem wenigstens ein automatisierter Arm (40) in eine Verschieberichtung (T1) parallel zur Längsachse (T14) des Gepäckraums (14) des Luftfahrzeugs beweglich montiert ist.

3. Gepäckraum (14) eines Luftfahrzeugs (12) nach Anspruch 1, bei dem zwei automatisierte Arme (40-1, 40-2) in Verschieberichtungen (T3) beweglich montiert sind, die untereinander und zur Längsachse (L14) des Gepäckraums (14) des Luftfahrzeugs parallel sind.

4. Gepäckraum (14) eines Luftfahrzeugs (12) nach einem der Ansprüche 1 bis 3, bei dem jeder automatisierte Arm (40, 40-1, 40-2) einen hinsichtlich der Länge (L48, L60) verlängerbaren Körper (48, 60) aufweist.

5. Gepäckraum (14) eines Luftfahrzeugs (12) nach einem der Ansprüche 1 bis 4, bei dem der Boden (72) des Gepäckraums (14) des Luftfahrzeugs eine Förderanlage (74) für Gepäckstücke (10) aufweist, die parallel zur Längsachse (L14) des Gepäckraums (14) des Luftfahrzeugs angeordnet ist.

6. Hülle (18) zum Konditionieren eines Gepäckstücks (10) für die automatisierte Behandlung dieses Gepäckstücks, wobei die Hülle (18) als Überzug (20) ausgebildet ist, und eine eigene, aber mit dem Überzug verbundene Greifoberfläche (22) aufweist, wobei die Greifoberfläche (22) von einer Scheibe (24) gebildet ist, die glatt ist für ein Aufgreifen mittels Unterdruck oder magnetisierbar ist für ein magnetisches Aufgreifen, mit Hilfe wenigstens eines automatisierten Arms (40, 40-1, 40-2) der Vorrichtung (16) für die automatisierte Behandlung von Gepäckstücken (10), die die Ausstattung eines Gepäckraums eines Luftfahrzeugs nach einem der Ansprüche 1 bis 5 bildet.

7. Hülle (18) zum Konditionieren eines Gepäckstücks (10) für die automatisierte Behandlung dieses Gepäckstücks nach Anspruch 6, bei dem die Hülle (18) ein intelligentes Etikett umfasst.

8. Hülle (18) zum Konditionieren eines Gepäckstücks (10) für die automatisierte Behandlung dieses Gepäckstücks (10) nach einem der Ansprüche 6 bis 7, bei dem die Hülle (18) visuelle Markierungen (26) aufweist.

9. Verfahren für die automatisierte Behandlung von Gepäckstücken (10) in einem Luftfahrzeug (12) mit einem Gepäckraum nach einem der Ansprüche 1 bis 5, wobei die Gepäckstücke (10) einzeln und auf automatisierte Weise in den Gepäckraum (14) des Luftfahrzeugs durch die Vorrichtung (16) zum automatisierten Behandeln von Gepäckstücken geladen werden und wobei vor deren Einladen in den Gepäckraum (14) des Luftfahrzeugs (12) die Gepäckstücke (10) in eine Hülle (18) zum Konditionieren nach einem der Ansprüche 6 bis 8 gepackt werden.

10. Verfahren für die automatisierte Behandlung von Gepäckstücken (10) in einem Luftfahrzeug (12) nach Anspruch 9, **dadurch gekennzeichnet, dass** die Gepäckstücke (10) unter Unterdruck in den Überzug (20) gepackt werden.

11. Verfahren für die automatisierte Behandlung von Gepäckstücken (10) in einem Luftfahrzeug (12) nach Anspruch 9 oder 10, bei dem die Hülle (18) ein intelligentes Etikett aufweist, in dem Information bezüglich den Formen und äußeren Abmessungen des konditionierten Gepäckstücks (10) gespeichert sind und bei dem die Vorrichtung (16) für die automatisierte Behandlung Mittel aufweist, um die intelligenten Etiketten zu lesen, wobei die Vorrichtung (16) für die automatisierte Behandlung diese Information dazu verwendet, um das Einladen der Gepäckstücke (10) in den Gepäckraum (14) auszuführen.

12. Verfahren für die automatisierte Behandlung von Gepäckstücken (10) in einem Luftfahrzeug (12) nach einem der Ansprüche 9 bis 11, bei dem die Hülle (18) visuelle Markierungen (26) umfasst, wobei die Vorrichtung (16) für die automatisierte Behandlung Mittel für die visuelle Erfassung der visuellen Markierungen (26) umfasst und die Vorrichtung (16) für die automatisierte Behandlung auf virtuelle Weise die Umgebung des Gepäckraums (14) kennt und die Vorrichtung (16) für die automatisierte Behandlung ein Gepäckstück (10) in den Gepäckraum (14) virtuell lokalisiert.

13. Verfahren für die automatisierte Behandlung von Gepäckstücken (10) in einem Luftfahrzeug (12) nach einem der Ansprüche 9 bis 12, bei dem die Vorrichtung (16) für die automatisierte Behandlung auf autonome Weise beim Einladen der Gepäckstücke (10) in den Gepäckraum (14) des Luftfahrzeugs (12) funktioniert.

14. Verfahren für die automatisierte Behandlung von Gepäckstücken (10) in einem Luftfahrzeug (12) nach einem der Ansprüche 9 bis 13, bei dem die Gepäckstücke (10) auf automatisierte Weise und individuell aus dem Gepäckraum (14) des Luftfahrzeugs (12) durch die Vorrichtung (16) für die automatisierte Behandlung der Gepäckstücke (10) entladen werden.

15. Verfahren für die automatisierte Behandlung von Gepäckstücken (10) in einem Luftfahrzeug (12) nach Anspruch 14, bei dem die Vorrichtung (16) für die automatisierte Behandlung auf autonome Weise zum Ausladen der Gepäckstücke (10) aus dem Gepäckraum (14) des Luftfahrzeugs (12) funktioniert.

## Claims

1. Aircraft (12) hold (14) comprising a device (16) for automated processing of luggage (10), the device (16) for automated processing comprising at least one automated arm (40, 40-1, 40-2) for handling luggage (10), each automated arm (40, 40-1, 40-2) being mounted so as to be able to move in translation (T1, T3) parallel to the longitudinal axis (L14) of the hold (14) of the aircraft (12), and each automated arm (40, 40-1, 40-2) comprising a head (42) for grasping an item of luggage (10) that operates with reduced pressure or by magnetism and offering a first mobility in rotation (R1, R3) about a first axis (A1, A3) parallel to the transverse axis (T14) of the hold (14) of the aircraft and a second mobility in rotation (R2, R4) about a second axis (A2, A4) perpendicular to the first axis (A1, A3).

2. Aircraft (12) hold (14) according to Claim 1, wherein said at least one automated arm (40) is mounted so as to be able to move in translation (T1) parallel to the transverse axis (T14) of the hold (14) of the aircraft.

3. Aircraft (12) hold (14) according to Claim 1, wherein two automated arms (40-1, 40-2) are mounted so as to be able to move in translation (T3) parallel to one another and parallel to the longitudinal axis (L14) of the hold (14) of the aircraft.

4. Aircraft (12) hold (14) according to one of Claims 1 to 3, wherein each automated arm (40, 40-1, 40-2) comprises a body (48, 60) having an extendable length (L48, L60).

5. Aircraft (12) hold (14) according to one of Claims 1 to 4, wherein the floor (72) of the hold (14) of the aircraft comprises a luggage (10) conveyor (74) disposed parallel to the longitudinal axis (L14) of the hold (14) of the aircraft.

6. Wrapper (18) for packaging an item of luggage (10) for the automated processing of said item of luggage, the wrapper (18) being in the form of a protective film (20), and comprising a grasping surface (22) separate from but secured to the protective film, said grasping surface (22) being carried by a disc (24) and smooth for grasping by way of reduced pressure or magnetizable for magnetic grasping by said at least one automated arm (40, 40-1, 40-2) of the device (16) for automated processing of luggage (10) equipping a aircraft hold according to one of Claims 1 to 5.

7. Wrapper (18) for packaging an item of luggage (10) for the automated processing of said item of luggage according to claim 6, wherein the wrapper (18) comprises an intelligent label.

8. Wrapper (18) for packaging an item of luggage (10) for the automated processing of said item of luggage (10) according to one of claims 6 to 7, wherein the wrapper (18) comprises visual markers (26).

9. Method for automated processing of luggage (10) in an aircraft (12) comprising a hold according to one of claims 1 to 5, the items of luggage (10) being loaded individually and in an automated manner into the hold (14) of the aircraft by the device (16) for automated processing of the luggage, and, before being loaded into the hold (14) of the aircraft (12), the items of luggage (10) being packaged in a packaging wrapper (18) according to one of claims 6 to 8.

10. Method for automated processing of luggage (10) in an aircraft (12) according to Claim 9, wherein the item of luggage (10) is wrapped in the protective film (20) under reduced pressure.

11. Method for automated processing of luggage (10) in an aircraft (12) according to Claim 9 or 10, wherein, the wrapper (18) comprising an intelligent label in which information relating to the shape and external dimensions of the packaged item of luggage (10) is stored, and the device (16) for automated processing comprising means for reading these intelligent labels, the device (16) for automated processing uses this information to load the items of luggage (10) into the hold (14).

12. Method for automated processing of luggage (10) in an aircraft (12) according to one of Claims 9 to 11, wherein, the wrapper (18) comprising visual markers (26), the device (16) for automated processing being aware in a virtual manner of the environment of the hold (14), the device (16) for automated processing locates virtually an item of luggage (10) in the hold (14).

13. Method for automated processing of luggage (10) in an aircraft (12) according to one of Claims 9 to 12, wherein the device (16) for automated processing operates in an autonomous manner to load the luggage (10) into the hold (14) of the aircraft (12).

14. Method for automated processing of luggage (10) in an aircraft (12) according to one of Claims 9 to 13, wherein the items of luggage (10) are unloaded in an automated manner and individually from the hold (14) of the aircraft (12) by the device (16) for automated processing of luggage (10).

15. Method for automated processing of luggage (10) in an aircraft (12) according to Claim 14, wherein the device (16) for automated processing operates in an autonomous manner to unload the items of luggage (10) from the hold (14) of the aircraft (12).
